# EUROPEAN PATENT APPLICATION

(11) **EP 1 369 792 A2**
(43) Date of publication of application: **10.12.2003**
(21) Application number: 03012538.9
(22) Date of filing: 02.06.2003
(51) Int. Cl.: G06F 17/30

(54) **Image processing apparatus, image processing method and program**

(30) Priority: 07.06.2002 JP 2002166964
(71) Applicant: KONICA CORPORATION, Tokyo (JP)
(72) Inventor: Takeda, Mayumi, Hachioji-si, Tokyo, 192-8505 (JP)
(74) Representative: Henkel, Feiler, Hänzel

(57) **Abstract**

There is described an image processing apparatus for displaying images. The apparatus includes an extracting section to extract related information, a grouping section to group the images into image groups, a display controlling section to control the display device so as to display the images for every image group, a sorting section to sort images included in each of the image groups, based on the related information, and an inputting section to input grouping information and/or sorting information. The display controlling section controls the display device so as to display the images, sorted by the sorting section, for every image group. Further, the inputting section inputs display-order changing information for changing a display-order of the images for every image group, and then, the display controlling section changes the display-order of the images for every image group to a new display-order based on the display-order changing information.

## Description

### BACKGROUND OF THE INVENTION

The present invention relates to an image processing apparatus for managing images to be displayed, an image processing method and to a program.

Heretofore, as an image processing apparatus that manages an image stored in a data base and displays it, there has been devised, for example, "an image display apparatus" described in TOKKAI No. 2001-202503. This image display apparatus selects an image stored in a data base and selects a display position for the image, and displays the selected image and the image to be processed at the selected display position.

Further, in "the image display apparatus and its control method" described in TOKKAI 2001-230992, a plurality of images stored in the data base are sorted based on the date of photographing, images are grouped by the number of images capable of being thumbnail-displayed, then, a typical image of each group is displayed as a table of thumbnail images, and if optional data are selected from the displayed thumbnail data, images of the selected group are displayed for a glance.

However, in the conventional image display apparatus as described above, if images are displayed from the selected display position, the number of times of switchovers for display conducted in each image retrieval grows greater because the number of images to be displayed is reduced, thus, a long time has been required to display a desired image. In particular, in the case of retrieval of an image from the vast amount of images, it was difficult to find out and show quickly, which has prevented efficient use of images.

On the other hand, in the case of the image processing apparatus for sorting images based on the date of photographing, when images before image processing and images after image processing are required to be found out, for example, desired images needed to be retrieved separately when retrieving plural images related in terms of the point other than information of date of photographing, thus, it was impossible for users to use images efficiently because it was impossible to display simultaneously.

### SUMMARY OF THE INVENTION

To overcome the abovementioned drawbacks in conventional image-processing apparatus, it is an object of the present invention to provide image-processing apparatus, in which a plurality of images are grouped into a plurality of image groups by extracting related information from incidental information included in each of the images, and which displays the image groups in a unit of group to speedily retrieve a desired image, and therefore, makes it possible to efficiently utilize the images.

Accordingly, to overcome the cited shortcomings, the abovementioned object of the present invention can be attained by image-processing apparatus, image-processing methods and computer programs described as follow.
(1) An apparatus for processing a plurality of images to be displayed on a display screen of a display device, comprising: an extracting section to extract related information, being common among the plurality of images, based on incidental information included in the plurality of images; a grouping section to group the plurality of images into a plurality of image groups, based on the related information extracted by the extracting section; and
   a display controlling section to control the display device so as to display the plurality of images for every image group grouped by the grouping section.
(2) The apparatus of item 1, wherein the related information includes at least one of a first information set for identifying each of the images, a second information set for indicating a storage area of image data, a third information set for indicating a priority of each of the images, a fourth information set for indicating a modification processing for each of the images and a fifth information set for indicating a time and date in respect to each of the images.
(3) The apparatus of item 1, further comprising: a sorting section to sort images included in each of the plurality of image groups, based on the related information; wherein the display controlling section controls the display device so as to display the images, sorted by the sorting section, for every image group grouped by the grouping section.
(4) The apparatus of item 3, further comprising: an inputting section to input grouping information and/or sorting information; wherein, when the inputting section inputs the grouping information, the grouping section groups the plurality of images into the plurality of image groups, based on the grouping information inputted by the inputting section, while, when the inputting section inputs the sorting information, the sorting section sorts the images included in each of the plurality of image groups, based on the sorting information inputted by the inputting section.
(5) The apparatus of item 4, wherein the inputting section inputs display-order changing information for changing a display-order of the images for every image group, and then, the display controlling section changes the display-order of the images for every image group, displayed on the display screen of the display device, to a new display-order based on the display-order changing information; and the apparatus further comprising: a related information revising section to revise the related information, based on the display-order changing information.
(6) The apparatus of item 1, wherein the display controlling section controls the display device so as to display both the images and the related information on the display screen of the display device.
(7) The apparatus of item 1, wherein the display controlling section controls the display device so as to display anyone of the images as a representative image of the image group on the display screen of the display device.
(8) The apparatus of item 7, wherein the display controlling section controls the display device so as to display both the representative image and a number of other images included in the image group represented by the representative image on the display screen of the display device.
(9) The apparatus of item 7, further comprising: a selecting section to select the representative image out of the images; wherein, when the selecting section selects the representative image out of the images, the display controlling section controls the display device so as to display both the representative image and other images included in the image group represented by the representative image on the display screen of the display device.
(10) The apparatus of item 1, wherein the display controlling section controls the display device so as to display a listing table of either all images or several images, included in the image group grouped by the grouping section on the display screen of the display device.
(11) The apparatus of item 1, wherein the display controlling section controls the display device so as to display either all images or several images, included in the image group grouped by the grouping section, in a mode of duplicating them with each other on the display screen of the display device.
(12) The apparatus of item 11, further comprising: a selecting section to select a specific image out of the images displayed in the mode of duplicating them with each other; wherein, when the selecting section selects the specific image, the display controlling section controls the display device so as to display the specific image selected by the selecting section at an uppermost position on the display screen of the display device.
(13) A method for processing a plurality of images, comprising the steps of: extracting related information, being common among the plurality of images, based on incidental information included in the plurality of images; grouping the plurality of images into a plurality of image groups, based on the related information extracted in the extracting step; and controlling a display device so as to display the plurality of images for every image group, grouped in the grouping step, on a display screen of the display device.
(14) The method of item 13, wherein the related information includes at least one of a first information set for identifying each of the images, a second information set for indicating a storage area of image data, a third information set for indicating a priority of each of the images, a fourth information set for indicating a modification processing for each of the images and a fifth information set for indicating a time and date in respect to each of the images.
(15) The method of item 13, further comprising the step of: sorting images included in each of the plurality of image groups, based on the related information; wherein the display device is controlled in the controlling step so as to display the images, sorted in the sorting step, for every image group grouped in the grouping step.
(16) The method of item 15, further comprising the step of: inputting grouping information and/or sorting information; wherein, when the grouping information are inputted in the inputting step, the plurality of images are grouped into the plurality of image groups, based on the grouping information, in the grouping step, while, when the sorting information are inputted in the inputting step, the images included in each of the plurality of image groups are sorted, based on the sorting information, in the sorting step.
(17) The method of item 16, wherein display-order changing information, for changing a display-order of the images for every image group, are inputted in the inputting step; and the method further comprising the steps of: changing the display-order of the images for every image group, displayed on the display screen of the display device, to a new display-order, based on the display-order changing information; and revising the related information, based on the display-order changing information.
(18) The method of item 13, wherein the display device is controlled in the controlling step so as to display both the images and the related information on the display screen of the display device.
(19) The method of item 1, wherein the display device is controlled in the controlling step so as to display anyone of the images as a representative image of the image group on the display screen of the display device.
(20) The method of item 19, wherein the display device is controlled in the controlling step so as to display both the representative image and a number of other images included in the image group represented by the representative image on the display screen of the display device.
(21) The method of item 19, further comprising the step of: selecting the representative image out of the images; wherein, when the representative image is selected out of the images in the selecting step, the display device is controlled in the controlling step so as to display both the representative image and other images included in the image group represented by the representative image on the display screen of the display device.
(22) The method of item 13, wherein the display device is controlled in the controlling step so as to display a listing table of either all images or several images, included in the image group grouped in the grouping step on the display screen of the display device.
(23) The method of item 13, wherein the display device is controlled in the controlling step so as to display either all images or several images, included in the image group grouped in the grouping step, in a mode of duplicating them with each other on the display screen of the display device.
(24) The method of item 23, further comprising the step of: selecting a specific image out of the images displayed in the mode of duplicating them with each other; wherein, when the specific image is selected in the selecting step, the display device is controlled in the controlling step so as to display the specific image selected in the selecting step at an uppermost position on the display screen of the display device.
(25) A computer program for processing a plurality of images, comprising the functional steps of: extracting related information, being common among the plurality of images, based on incidental information included in the plurality of images; grouping the plurality of images into a plurality of image groups, based on the related information extracted in the extracting step; and controlling a display device so as to display the plurality of images for every image group, grouped in the grouping step, on a display screen of the display device.
(26) The computer program of item 25, wherein the related information includes at least one of a first information set for identifying each of the images, a second information set for indicating a storage area of image data, a third information set for indicating a priority of each of the images, a fourth information set for indicating a modification processing for each of the images and a fifth information set for indicating a time and date in respect to each of the images.
(27) The computer program of item 25, further comprising the functional step of: sorting images included in each of the plurality of image groups, based on the related information; wherein the display device is controlled in the controlling step so as to display the images, sorted in the sorting step, for every image group grouped in the grouping step.
(28) The computer program of item 27, further comprising the functional step of: inputting grouping information and/or sorting information; wherein, when the grouping information are inputted in the inputting step, the plurality of images are grouped into the plurality of image groups, based on the grouping information, in the grouping step, while, when the sorting information are inputted in the inputting step, the images included in each of the plurality of image groups are sorted, based on the sorting information, in the sorting step.
(29) The computer program of item 28, wherein a display-order changing information, for changing a display-order of the images for every image group, are inputted in the inputting step; and the computer program further comprising the functional steps of: changing the display-order of the images for every image group, displayed on the display screen of the display device, to a new display-order, based on the display-order changing information; and revising the related information, based on the display-order changing information.
(30) The computer program of item 25, wherein the display device is controlled in the controlling step so as to display both the images and the related information on the display screen of the display device.
(31) The computer program of item 25, wherein the display device is controlled in the controlling step so as to display anyone of the images as a representative image of the image group on the display screen of the display device.
(32) The computer program of item 31, wherein the display device is controlled in the controlling step so as to display both the representative image and a number of other images included in the image group represented by the representative image on the display screen of the display device.
(33) The computer program of item 31, further comprising the functional step of: selecting the representative image out of the images; wherein, when the representative image is selected out of the images in the selecting step, the display device is controlled in the controlling step so as to display both the representative image and other images included in the image group represented by the representative image on the display screen of the display device.
(34) The computer program of item 25, wherein the display device is controlled in the controlling step so as to display a listing table of either all images or several images, included in the image group grouped in the grouping step on the display screen of the display device.
(35) The computer program of item 25, wherein the display device is controlled in the controlling step so as to display either all images or several images, included in the image group grouped in the grouping step, in a mode of duplicating them with each other on the display screen of the display device.
(36) The computer program of item 35, further comprising the functional step of: selecting a specific image out of the images displayed in the mode of duplicating them with each other; wherein, when the specific image is selected in the selecting step, the display device is controlled in the controlling step so as to display the specific image selected in the selecting step at an uppermost position on the display screen of the display device.
   Further, to overcome the abovementioned problems, other image-processing apparatus, image-processing methods and computer programs embodied in the present invention, will be described as follow:
(37) An image-processing apparatus, characterized in that,
   in the image-processing apparatus, which manages a plurality of images and displays the plurality of images on a display means,
   extracting means for extracting related information, being common among the plurality of images, based on incidental information of the plurality of images,
   grouping means for grouping the plurality of images, based on the related information extracted by the extracting means, and
   display controlling means for displaying the plurality of images for every image group, grouped by the grouping section, on the display means
   are provided.
(38) An image-processing apparatus, described in item 37, characterized in that
   the related information includes at least one of identifying information of the image, information of the storing place, information for indicating a priority, information of a modification processing and information of a time and date in respect to the image.
(39) The image-processing apparatus, described in item 37 or 38, characterized in that
   sorting means for sorting images included in the group, based on the related information is further provided, and
   the display controlling means displays the images, sorted by the sorting section, for every group on the display means.
(40) The image-processing apparatus, described in item 39, characterized in that
   the image-processing apparatus is further provided with inputting means for inputting either anyone of or both grouping information for grouping the images and sorting information for sorting the images grouped, and
   when the inputting means inputs the grouping information, the grouping means groups the images, based on the grouping information, while, when the inputting means inputs the sorting information, the sorting means sorts the images included in the group, based on the sorting information.
(41) The image-processing apparatus, described in item 40, characterized in that
   the inputting means inputs a display-order changing information for changing a display-order of the images for every group, and then, the display controlling means changes the display-order of the images for every group, displayed on the display means, based on the display-order changing information; and
   related information revising means for revising the related information, based on the display-order changing information.
(42) An image-processing method, characterized in that
   the image-processing method includes
   an extracting process for extracting related information, being common among the plurality of images, based on incidental information included in a plurality of images,
   a grouping process for grouping the plurality of images, based on the related information extracted, and
   a displaying process for displaying the plurality of images for every group grouped on the display means.
(43) The image-processing method, described in item 42, characterized in that
   the related information includes at least one of identifying information of the image, information of the storing place, information for indicating a priority, information of a modification processing and information of a time and date in respect to the image.
(44) The image-processing method, described in item 42 or 43, characterized in that
   the image-processing method further includes
   a sorting process for sorting images included in the group, based on the related information, and
   a displaying process for displaying the images sorted for every group on the display means.
(45) The image-processing method, described in item 44, characterized in that
   the image-processing method further includes
   an inputting process for inputting either anyone of or both grouping information for grouping the images and sorting information for sorting the images grouped,
   a grouping process for grouping the images, based on the grouping information when the grouping information are inputted, and
   a rearranging process for rearranging the images included in the group, based on the sorting information when the sorting information are inputted.
(46) The image-processing method, described in item 45, characterized in that
   the image-processing method further includes
   an inputting process for inputting display-order changing information for changing a display-order of the images for every group,
   a changing process for changing the display-order of the images for every group, displayed on the display means, based on the display-order changing information, and
   a revising process for revising the related information, based on the display-order changing information.
(47) A program in computer, which manages a plurality of images and display the images on a display means, for realizing the functions of:
   an extracting function for extracting related information, being common among the plurality of images, based on incidental information included in a plurality of images;
   a grouping function for grouping the plurality of images, based on the related information extracted; and
   a displaying function for displaying the plurality of images for every group grouped on the display means.
(48) The program, described in item 47, characterized in that
   the related information includes at least one of identifying information of the image, information of the storing place, information for indicating a priority, information of a modification functioning and information of a time and date in respect to the image.
(49) The program, described in item 47 or 48, for further realizing the functions of:
   a sorting function for sorting images included in the group, based on the related information, and
   a displaying function for displaying the images sorted for every group on the display means.
(50) The program, described in item 49, for further realizing the functions of:
   an inputting function for inputting either anyone of or both grouping information for grouping the images and sorting information for sorting the images grouped,
   a grouping function for grouping the images, based on the grouping information when the grouping information are inputted, and
   a rearranging function for rearranging the images included in the group, based on the sorting information when the sorting information are inputted.
(51) The program, described in item 50, for further realizing the functions of:
   an inputting function for inputting display-order changing information for changing a display-order of the images for every group,
   a changing function for changing the display-order of the images for every group, displayed on the display means, based on the display-order changing information, and
   a revising function for revising the related information, based on the display-order changing information.

### BRIEF DESCRIPTION OF THE DRAWINGS

Other objects and advantages of the present invention will become apparent upon reading the following detailed description and upon reference to the drawings in which:
Fig. 1 is a block diagram showing the functional structure of computer 1 of an embodiment to which the invention is applied;
Fig. 2 is a diagram showing a classification file;
Fig. 3 is a flow chart showing image display processing by CPU 2 in Fig. 1;
Fig. 4 is a diagram showing an example of grouping image data based on the date of photographing;
Fig. 5 is a diagram showing an example of grouping image data based on relationship of processing;
Fig. 6 is a diagram showing an example of grouping and sorting image data based on information of the date of photographing;
Fig. 7(a) and Fig. 7(b) are diagrams showing an example of data display for displaying data of typical images of plural groups one by one;
Fig. 8 is a diagram showing an example of data display wherein data of typical images of plural groups are displayed one by one, and typical image data of the group composed of plural image data are encircled with a thick frame to be displayed;
Fig. 9 is a diagram showing an example of data display wherein data of typical images of plural groups are displayed one by one, and typical image data of the group composed of plural image data are provided with plural buttons to be displayed;
Fig. 10(a) and Fig. 10(b) are diagrams showing an example of data display wherein typical image data of plural groups are displayed ahead of the other image data, which are superposed under the typical image data to be displayed;
Fig. 11 is a diagram showing an example of data display wherein image data in one group are superposed to be displayed;
Fig. 12 is a diagram showing an example of data display wherein image data in one group are superposed to be displayed;
Fig. 13(a) and Fig. 13(b) is a diagram showing an example of data display wherein typical image data of plural groups are determined and displayed ahead of the other image data a part of which is superposed under the typical image data to be displayed;
Fig. 14 is a diagram showing an example of data display wherein original image data within a group are displayed and related information of the other image data in the same group is displayed;
Fig. 15(a) and Fig. 15(b) are diagrams showing an example of data display wherein all image data for one group are displayed for a glance;
Fig. 16 is a diagram showing an example of data display wherein typical image data of plural groups are displayed for a glance, and the other image data, which are smaller in terms of a size than the typical image data are displayed;
Fig. 17(a) and Fig. 17(b) are diagrams showing an example of data display wherein image data of a part of one group are displayed;
Fig. 18 is a diagram showing an example of data display wherein all image data in one group and related information of the image data are displayed simultaneously;
Fig. 19 is a diagram showing an example of data display wherein all image data in one group and related information of partial image data are displayed simultaneously;
Fig. 20 is a diagram showing an example of data display wherein all image data for one group are displayed, and related information is displayed on each image data on an overlaying basis;
Fig. 21 is a diagram showing an example of data display wherein image data in one group and related information are displayed simultaneously;
Fig. 22 is a diagram showing an example of data display wherein typical image data of plural groups, typical image data in process of being selected, other image data belonging to the same group stated above and related information are displayed;
Fig. 23 is a diagram showing an example of data display wherein typical image data in one group and the number of the other image data are displayed;
Fig. 24 is a diagram showing an example of data display wherein typical image data in one group and the number of the other image data are displayed;
Fig. 25 is a diagram showing an example of data display wherein typical image data in one group and an amount of the other image data are displayed;
Fig. 26 is a diagram showing an example of data display wherein typical image data in one group and the number of the other image data are displayed;
Fig. 27 is a diagram showing an example of data display wherein typical image data of plural groups are displayed one by one, and plural buttons are provided on typical image data of the group composed of plural image data to be displayed;
Fig. 28 is a diagram showing an example of data display wherein typical image data of plural groups are displayed one by one, and plural buttons are provided on typical image data of the group composed of plural image data to be displayed;
Fig. 29(a) and Fig. 29(b) are diagrams showing an example of image area transition wherein typical image data of plural groups are displayed one by one, and after the typical image data are selected, image data in the same group as that for the aforementioned typical image data are displayed for a glance;
Fig. 30(a), Fig. 30(b) and Fig. 30(c) are diagrams showing an example of image area transition wherein typical image data of plural groups are displayed one by one, and after the typical image data are selected, image data in the same group as that for the aforementioned typical image data are displayed for a glance, then, new typical image data are selected so that the typical image data are changed;
Fig. 31(a) and Fig. 31(b) are diagrams showing an example of image area transition wherein partial or all image data in plural groups are superposed to be displayed, and the selected image data are displayed ahead of the others; and
Fig. 32(a) is a diagram showing plural image data in one group and related information, and Fig. 32(b) is a diagram showing an example wherein related information is changed when a user rearrange the image data shown in Fig. 32(a).

### DETAILED DESCRIPTION OF THE PREFERRED EMBODIMENT

An embodiment of the invention will be explained in detail as follows, referring to the drawings. In the structures stated above, in this case, information showing a degree of priority is incidental information showing a degree of priority of an image established by a user or the like. Further, with respect to processing and matters relevant thereto, let it be assumed that plural images generated from the same image are related to the processing. Further, information of the time relating to the image is specifically information such as the date and hour of photographing for the image, the date of generation, the date of processing, the date of reading from a film or from a photograph and the date of access. Incidentally, as information of the time, it is also possible to use information of a certain period of time such as a year, a month and a time zone, without being limited to information about the concrete date and hour.

Incidentally, CPU 2 in the following embodiment has functions as an extracting means, a grouping means, a display controlling means, a sorting means, a related information updating means and a selection means, and inputting section 3 has a function as an inputting means, while, display section 6 has a function as a display means.

First, the structure will be explained.

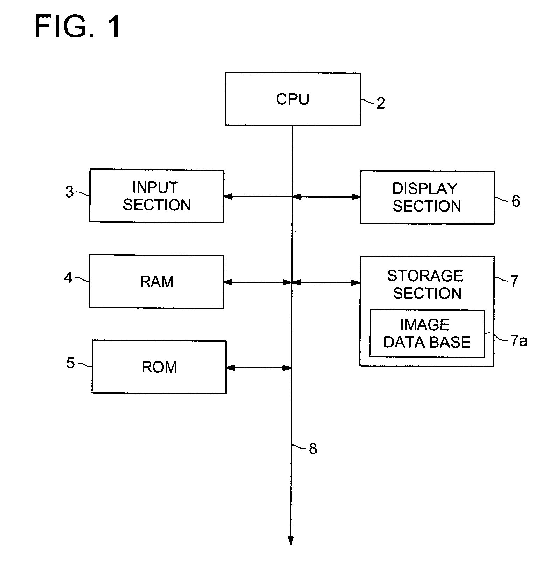

Fig. 1 is a block diagram showing the functional structure of computer 1 of the present embodiment. As shown in Fig. 1, computer 1 is composed of CPU 2, input section 3, RAM 4, ROM 5, display section 6 and storage section 7, and each section is connected each other by bus 8 so that each of them may transmit and receive data each other.

CPU (Central Processing Unit) 2 develops system program read out of ROM 5 and various application programs read out of the storage section 7 under instruction from the input section 3 on the work area in RAM 4 to execute them, then, controls each section of the computer 1, and displays the process and the results of the processing based on the executed programs on the display section 6 and preserves processed data on the instructed storage area in the storage section 7. To be concrete, CPU 2 conducts image display processing which will be described later.

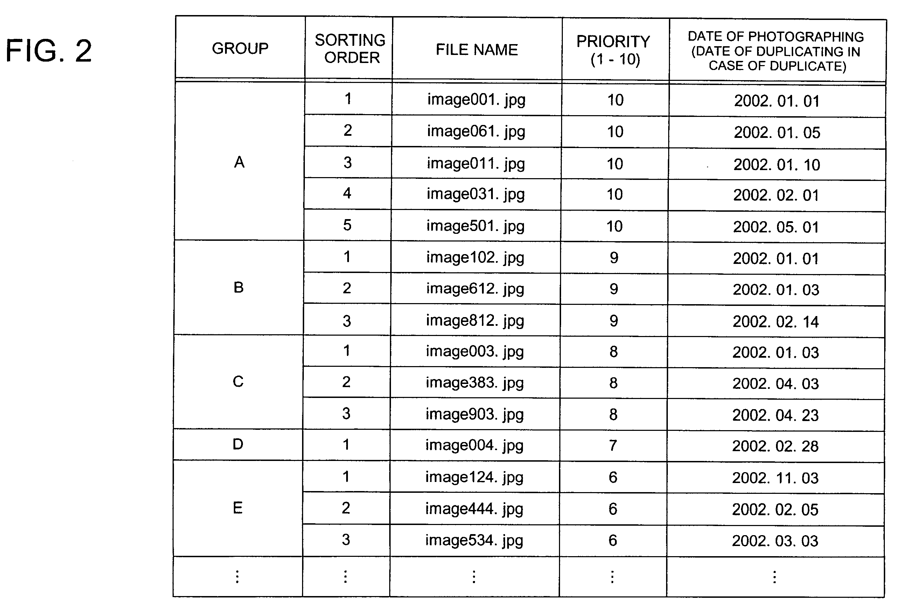

CPU 2 groups related information of image data stored in image data base 7a in the storage section 7 in the image display processing, based on grouping information, and sorts image data of each group based on sorting information. Further, CPU 2 prepares a classification file (see Fig. 2) in the storage section 7, and stores the results of processing for the grouping and sorting in the classification file. When an instruction for image data display by a user is inputted through the input section 3, images are displayed on the display section 6 based on the classification file stored in the storage section 7.

Fig. 2 is a diagram showing a classification file. As shown in Fig. 2, image data are grouped on the classification file based on a degree of priority, and are sorted in the order of the date and hour of photographing. For example, image data having a degree of priority of 10 are classified to group A and image data having a degree of priority of 9 are classified to group B, and image data classified into each group are sorted in the order of the date and hour of photographing. Incidentally, though there are shown a file name, a degree of priority and the date and hour of photographing as related information in Fig. 2, related information items are not limited to the foregoing.

The input section 3 is composed of a key board provided with a character/alphanumeric character input key, a cursor key and with various functional keys and of a mouse representing a pointing device, and it outputs press-down signals of a key that is pressed down on the key board and operation signals by the mouse to CPU 2 as an input signal.

RAM (Random Access Memory) 4 develops a system program executed by CPU 2, various types of application programs and an image display processing program, and forms a word area on which various types of data to be processed in each program processing are developed.

ROM (Read Only Memory) 5 stores a system program executed by CPU 2, various types of application programs and an image display processing program.

The display section 6 is composed of LCD (Liquid Crystal Display) and CRT (Cathode Ray Tube), and displays various types of processing processes and image data, conforming to an instruction of display signals inputted from CPU 2.

In the storage section 7, there are stored various types of application programs stated above, the image display processing program, image data base 7a, grouping information and sorting information, and this storage section 7 is of the structure including a magnetic recording medium, an optical recording medium, or a recording medium capable of being read by CPU such as a semiconductor memory. This recording medium includes a portable medium such as CD-ROM and a memory card and a fixed medium such as a hard disc. Further, a classification file that is formed by CPU 2 in image display processing and stores processing results for grouping and rearranging of images is housed.

Image data base 7a is a data base that stores a plurality of images. Each of image data stored in the image data 7a has related information in its header. The related information is information which is common to plural image data. Specifically, in the related information, there are included discriminating information of image data (for example, a file name), information about a location for housing, information showing a degree of priority, information about processing and matters relevant thereto and information about time such as the date and hour of photographing, the date of generation, the date of processing, the date of access and the date of reading from a film or from a photograph.

Grouping information stored in storage section 7 is information for grouping image data, and sorting information is information for sorting image data for each group. Incidentally, the grouping information and the sorting information may be either stored in the storage section 7 in advance, or inputted and established by a user through input section 3. Optional information included in the aforementioned related information or a plurality of pieces of information included in the related information may be combined with the grouping information and the sorting information to be used. For example, when a file name of image data is used for the grouping information, and when information about the date of photographing and information about the location of housing are used for the sorting information, CPU 2 groups image data based on the file name and then, sorts image data of each group based on information about the date of photographing and about the location of housing.

Next, operations of the present embodiment will be explained.

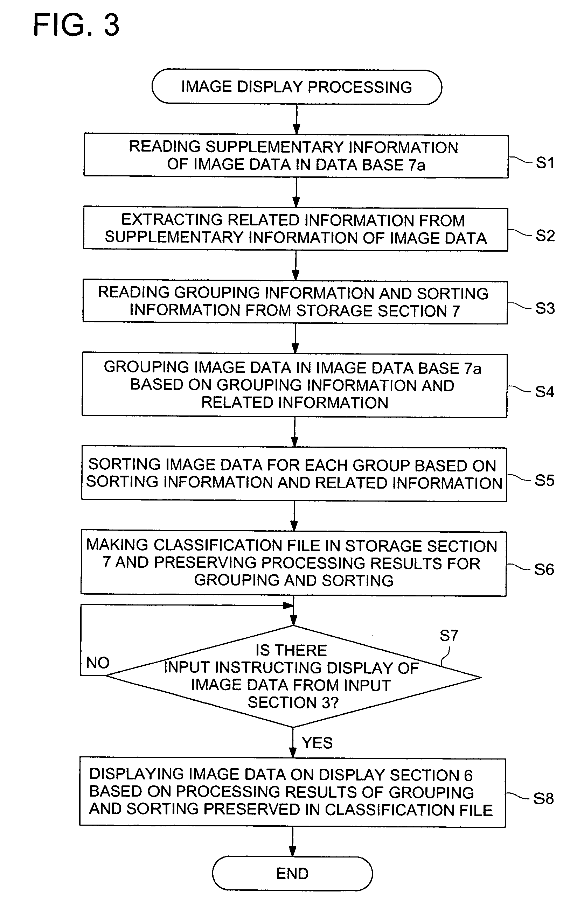

Incidentally, each program for conducting operations shown on a flow chart in Fig. 3 is housed in the storage section 7 in a form capable of being read by a computer, and CPU 2 conducts operations based on the program code in succession.

Fig. 3 is a flow chart showing image display processing conducted by CPU 2. As shown in Fig. 3, in the image display processing, CPU 2 reads incidental information from the header of each image data stored in data base 7a in the storage section 7 (step S1), and extracts, from the incidental information thus read, related information which is common in plural data (step S2). Then, it reads grouping information and sorting information both stored in the storage section 7 (step S3). Then, CPU 2 groups image data based on the grouping information thus read and on the related information thus extracted (step S4), and it further sorts image data thus grouped based on sorting information (step S5).

Then, CPU 2 prepares a classification file in the storage section 7, and preserves the results of processing of grouping and sorting for image data respectively in the aforesaid step S4 and step S5 (step S6). Then, CPU 2 distinguishes whether the user's instruction for image data display has been inputted from input section 3 or not (step S7), and if no instruction has been inputted (step S7: NO), CPU 2 continues standby, while, if the instruction has been inputted (step S7: YES), it displays, on display section 6, the image data sorted for each group, by referring to the results of the processing for grouping and sorting stored in the classification file (step S8), thus, the image display processing is terminated.

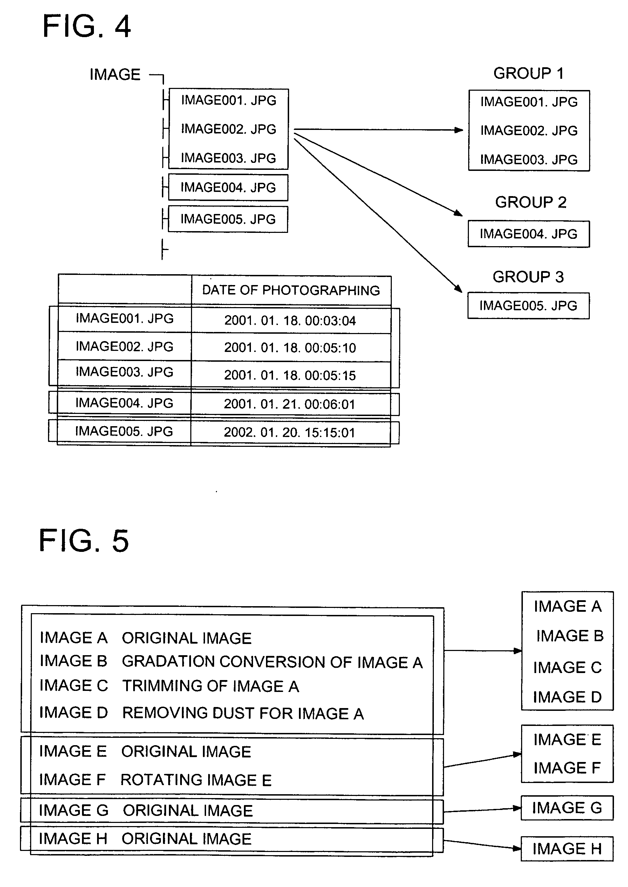

Referring to Fig. 4 - Fig. 6, there will be explained as follows the examples of grouping and sorting of image data for image display processing by CPU 2 respectively in the step S4 and step S5.

Fig. 4 is a diagram showing an example for grouping image data based on the date of photographing. In the example shown in Fig. 4, image data are grouped by CPU 2 based on the date of photographing, and image data IAMGE001.JPG, IAMGE002.JPG and IMAGE003.JPG which were photographed on the 18^{th} of January are grouped in group 1, image data IMAGE004.JPG which were photographed on the 21st of January are grouped in group 2, and image data IMAGE005.JPG which were photographed on the 20^{th} of January in 2002 are grouped in group 3.

Fig. 5 is a diagram showing an example for grouping image data based on processing and matters relevant thereto. In the example shown in Fig. 4, data A of original image, data of image B that is generated by converting gradation of image A, data of image C that is generated by trimming data of image A and data of image D that is generated by removing dust from data of image D are grouped in the same group, data of original image E and data of original image F that is generated by rotating data of the image E are grouped in the same group and data of original image G and data of original image H are grouped in their respective groups.

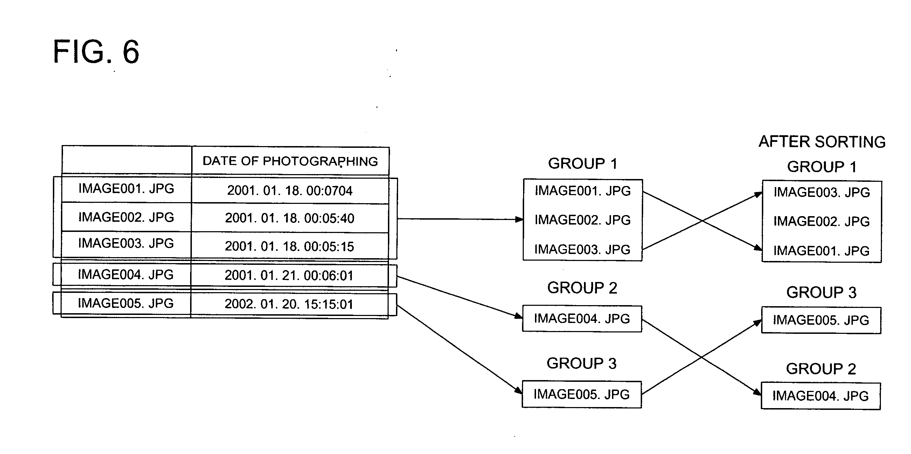

Fig. 6 is a diagram showing an example for grouping and sorting image data based on information of the date and hour of photographing. In the example shown in Fig. 6, image data IAMGE001.JPG, IAMGE002.JPG and IMAGE003.JPG which were photographed on January 18, 2001 are grouped in group 1, image data IMAGE004.JPG which were photographed on January 21, 2001 are grouped in group 2, and image data IMAGE005.JPG which were photographed on January 20, 2001 are grouped in group 3, and further, in the group 1 including plural image data, image data are sorted in the order of IAMGE003.JPG, IAMGE002.JPG and IMAGE001.JPG in which the oldest date of photographing comes first. Incidentally, it is also possible to sort in the order wherein the newest date of photographing comes first. It is further possible to sort the group in the order of the date of photographing to sort, for example, that image data IMAGE005.JPG which were photographed on the 20^{th} of January 20 are grouped in group 2 and image data IMAGE004.JPG which were photographed on the 21st of January are grouped in group 3.

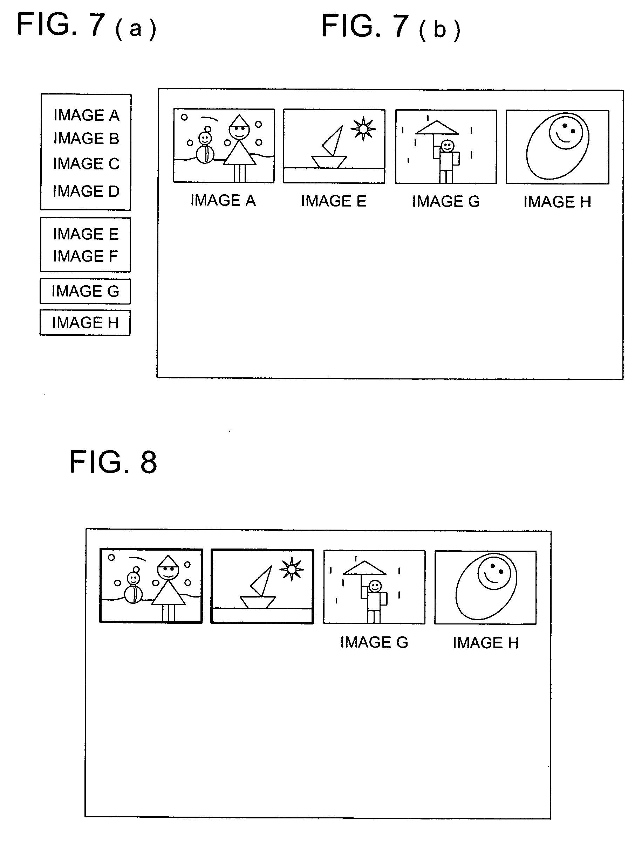

Next, referring to Fig. 7 - Fig. 32, there will be explained as follows the examples of displaying image data displayed on display section 6 in step S8 of image display processing by CPU 2.

Typical image data will now be explained. The typical image data represent image data which represent each group determined in image display processing by CPU 2, they may be single or plural. The typical image data are determined based on related information of image data, and for example, it is possible to make the image data oldest in terms of the date of photographing or image data sorted to be the first by grouping and sorting of CPU 2 to be the typical image data. Information with which the typical image data is established may be either stored in storage section 7 in advance or inputted through input section 3.

Fig. 7 is a diagram showing examples of data display which display typical image data of each group one by one. In the display examples in Fig. 7, there are four groups including a group having therein four image data of image A, image B, image C and image D, a group having therein image data of image E and image F, a group having therein data of image G and a group having therein data of image H, as shown in Fig. 7 (a), while, CPU 2 displays image data of image A, image E, image G and image H each representing typical image data of each group, as shown in Fig. 7 (b). In the display examples in Fig. 7, typical image data only are displayed, and therefore, even when a large amount of image data are stored in data base 7a, it is possible to display the desired image data quickly because image data can be retrieved and displayed stepwise, by selecting the typical image data first and by displaying image data other than the selected typical image data in the same group as for the typical image data.

Further, it is possible to display the typical image data of each group one by one and to display the typical image data of the group composed of plural image data by encircling with a thick frame, as shown in Fig. 8. This method of displaying makes it possible to recognize promptly presence of image data other than the typical image data in the group to which the typical image data belong, and therefore, time and labor for useless retrieval of other image data belonging to the same group as for the data of image G shown in Fig. 8, for example, can be saved. Incidentally, as shown in Fig. 89, plural buttons showing that plural image data are present in the group may also be displayed in place of the display by thick frames in Fig. 8. Further, when the number of groups is too large to display all typical image data of respective groups on one image area, it is also possible to conduct scroll display, or to divide typical image data into plural pages and to switch image area data to display in succession.

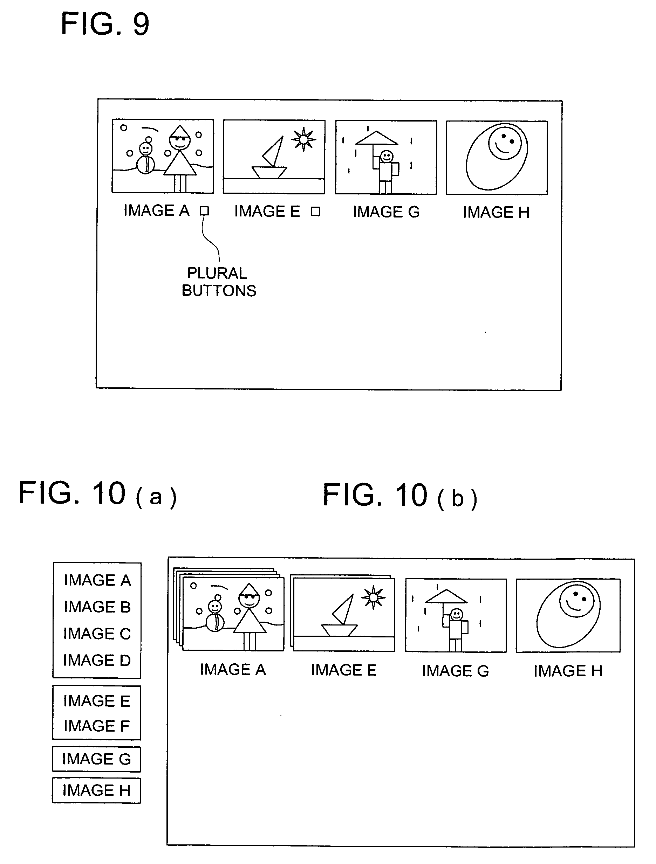

Fig. 10 is a diagram showing an example of data display wherein typical image data of each group are displayed ahead of others and the other image data are displayed to be superposed under the typical image data to be displayed in the order of sorting in rearrangement. In the example shown in Fig. 10, there are four groups including a group having therein four image data, of image A, image B, image C and image D, a group having therein image data of image E and image F, a group having therein data of image G and a group having therein data of image H, as shown in Fig. 10 (a). CPU 2 displays ahead image data of image A, image E, image G and image H each representing typical image data of each group, as shown in Fig. 10 (b), so that image B, image C and image D are superposed under the data of image A, and data of image F are superposed under data of image E. Incidentally, image data to be displayed under the typical image data are slightly shifted from the typical image data so that each typical image data and other image data belonging to the same group for the typical image data can be confirmed. In this example of display, image data divided into plural groups are displayed simultaneously, thereby, a user can confirm visually an amount of image data in data base 7a, and can grasp the state of housing of image data in data base 7a.

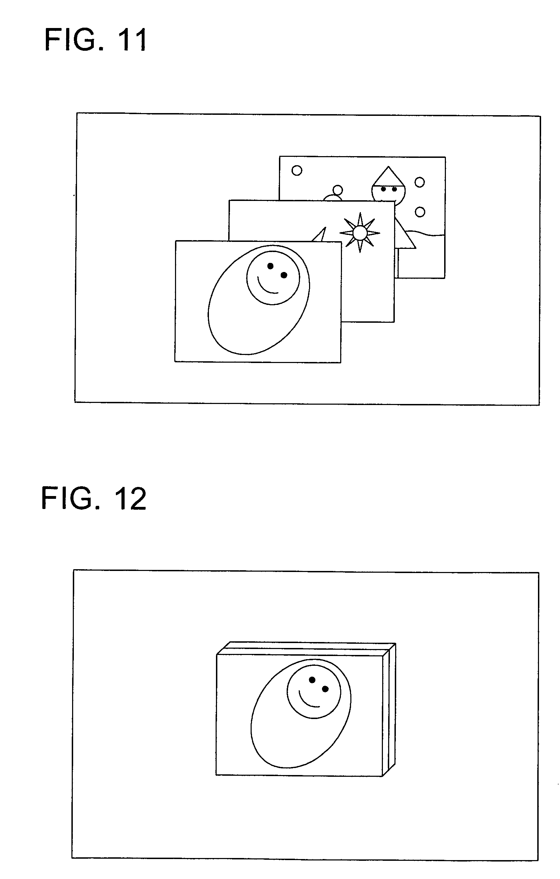

Incidentally, as shown in Fig. 11, it is possible to make an area where the typical image data and other image data are overlapped to be small so that image data displayed to be superposed under may be observed easily. Further, if other image data are drawn to be superposed under the typical image data as shown in Fig. 12, even when a large number of image data are present in the group, the typical image data and the number of other image data can be confirmed simultaneously, although it is impossible to confirm the contents of the other image data.

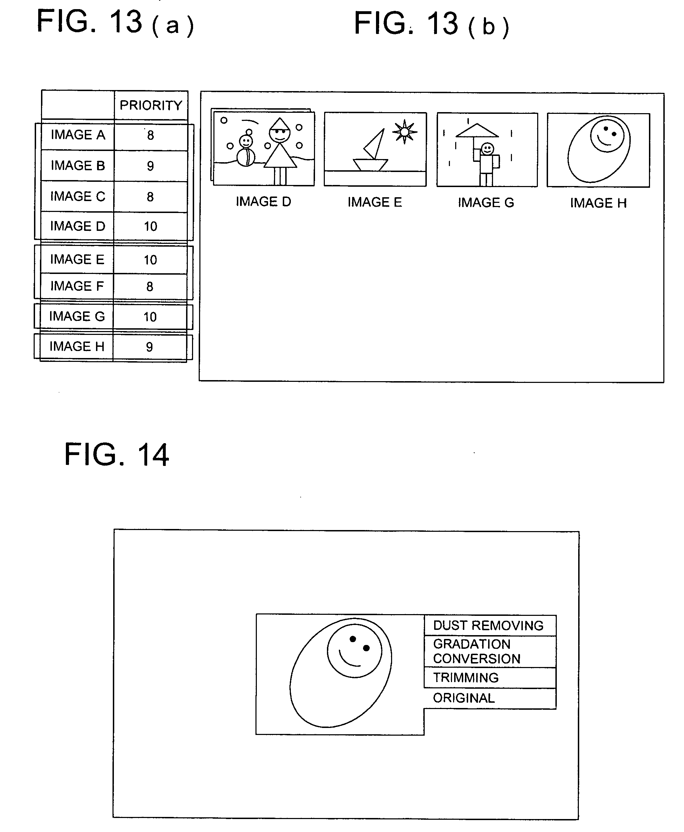

Fig. 13 is a diagram showing an example of data display wherein typical image data of each group are determined and displayed ahead of the other image data and a part of which is superposed under the typical image data to be displayed. In the example shown in Fig. 13, CPU 2 determines the typical image data based on information of a degree of priority of each image data and displays image data having a threshold value of 9 or more for the degree of priority. As shown in Fig. 13 (a), there are groups including a group composed of data of image A, image B, image C and image D, a group composed of data of image E and image F, a group of data of image G and a group of data of image H, and CPU 2 displays ahead each image data of image D, image E, image G and image H each having the highest priority in each group, as typical image data, as shown in Fig. 13 (b), and further displays by superposing under data of image A the data of image B having priority 9 that is the second highest in terms of priority in the group to which the data of image A belong. Under this arrangement, if a user establishes a degree of priority in advance, the user can display only image data which are more important for the user, because image data are displayed in the order wherein the highest priority comes first.

Fig. 14 is a diagram showing an example of data display wherein original image data within a group are displayed and related information of the other image data in the same group is displayed. In the example shown in Fig. 14, CPU 2 groups image data based on information about processing and matters relevant thereto, and under the image data displayed ahead and its related information "original", there are displayed image data and its related information "dust removal" wherein dust removal processing has been conducted on original image data, image data and its related information "gradation conversion" wherein gradation conversion has been conducted and image data and its related information "trimming" wherein trimming has been conducted.

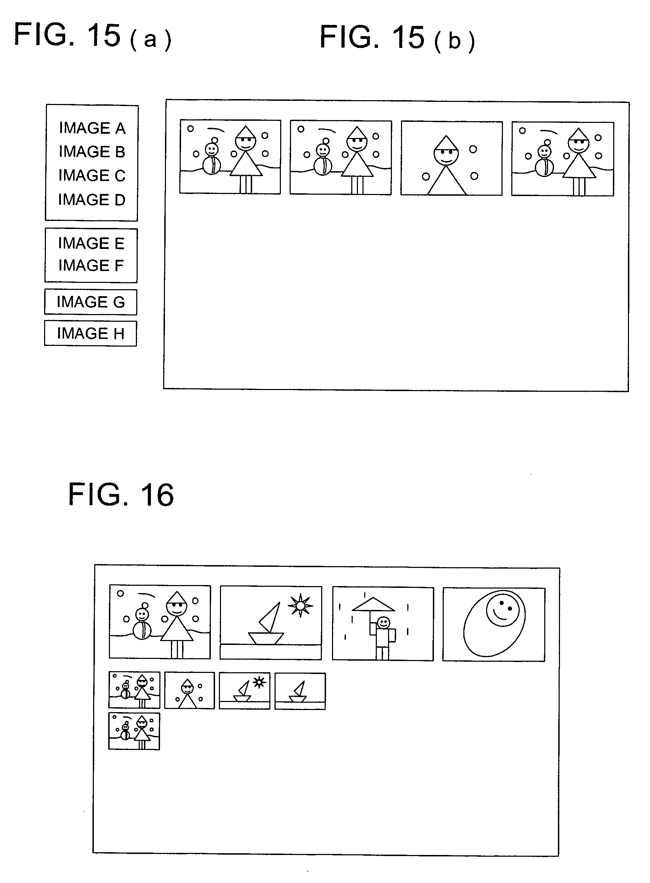

Fig. 15 is a diagram showing an example of data display wherein all image data for one group are displayed for a glance. In the example shown in Fig. 15, there are four groups including a group composed of image data of image A, image B, image C and image D, a group composed of data of image E and image F, a group of data of image G and a group of data of image H, as shown in Fig. 15 (a), and all four image data belonging to the first group are displayed for a glance by CPU 2. Incidentally, when the second group is selected, data of image E and image F both belonging to the second group are displayed. In this example of display, if the group is selected, all image data belonging to the selected group are displayed simultaneously. Therefore, for example, when image data similar to the desired image data are displayed, if image data in the group to which the image data under display belong are displayed for a glance, possibility to display the desired image data is high, and desired image data can be searched and displayed quickly.

Fig. 16 is a diagram showing an example of data display wherein typical image data of each group are displayed for a glance, and the other image data which are smaller in terms of a size than the typical image data are displayed. In this example of display, a user can confirm typical image data of each group and other image data simultaneously, and can distinguish the typical image data simply.

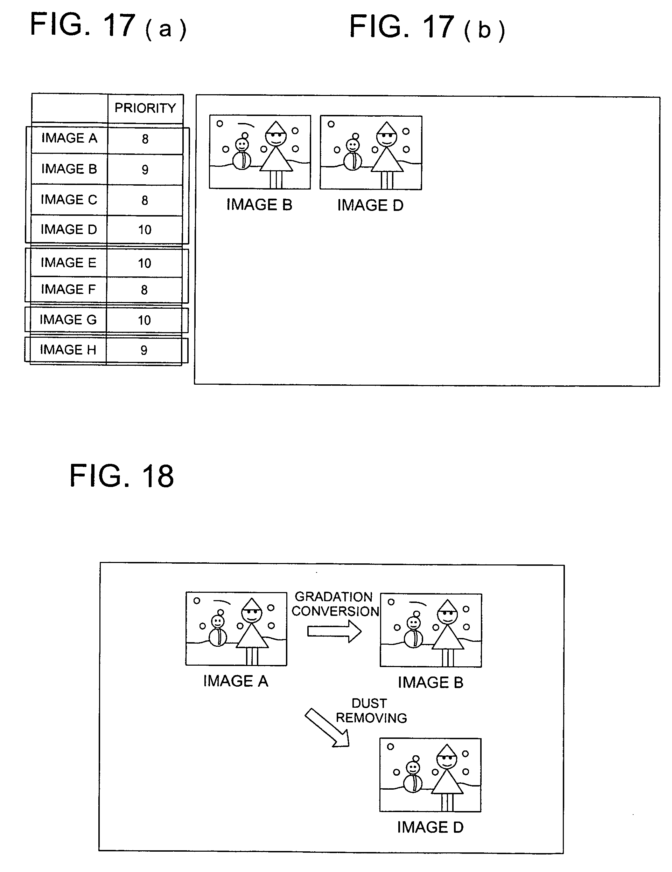

Fig. 17 is a diagram showing an example of data display wherein image data of a part of one group are displayed. In this example of display, there are displayed, as shown in Fig. 17 (b), only image B and image D having a threshold value of 9 or more for the degree of priority among the group composed of image data for image A, image B, image C and image D shown in Fig. 17 (a). This example of display is effective when the number of image data grouped in one group is large, for example, and only image data having high degree of priority can be displayed to be observed easily.

Fig. 18 is a diagram showing an example of data display wherein all image data in one group and related information of the image are displayed simultaneously. In the example shown in Fig. 18, CPU 2 displays image data and information of processing and matters relevant thereto representing related information of the image data. To be concrete, it indicates that data of image A are converted in terms of gradation to generate data of image B, and dust removal processing is conducted on data of image A to generate data of image D. This example of display makes it possible to confirm a plurality of image data and relationship between the image data on one image area.

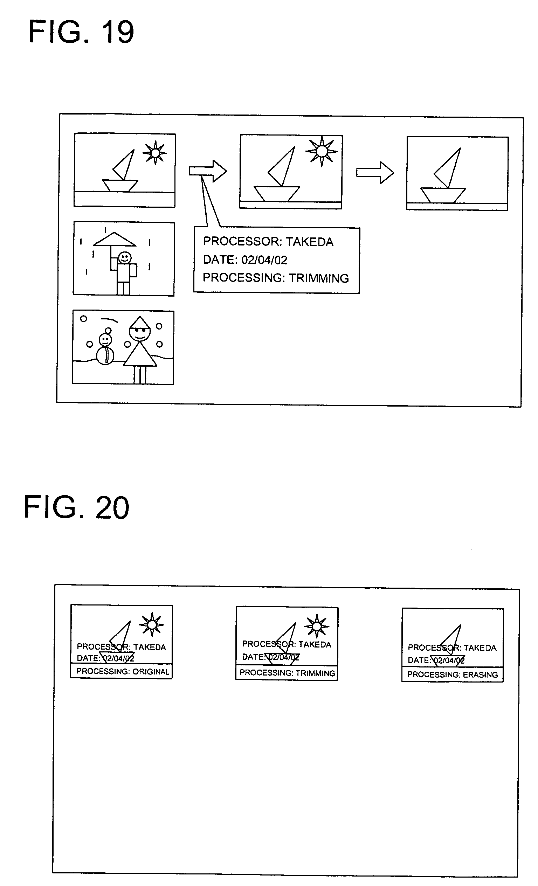

It is also possible to arrange so that if a position between plural image data is selected, the related information between plural image data indicated to interpose the selected position is displayed, as shown in Fig. 19. In the example shown in Fig. 19, the position between the image data at the top end on the left side and the image data positioned on the right side of the aforesaid image data is selected, and CPU 2 displays related information "processor: TAKEDA, date: 02/04/02, processing: Trimming" which shows relationship between the image data, at the position between the two image data. Further, as shown in Fig. 20, the related information of each image data in display may also be overlaid on the image data to be displayed. In the example of display in Fig. 19 or Fig. 20, it is possible to display desired related information only together with image data while displaying the image data.

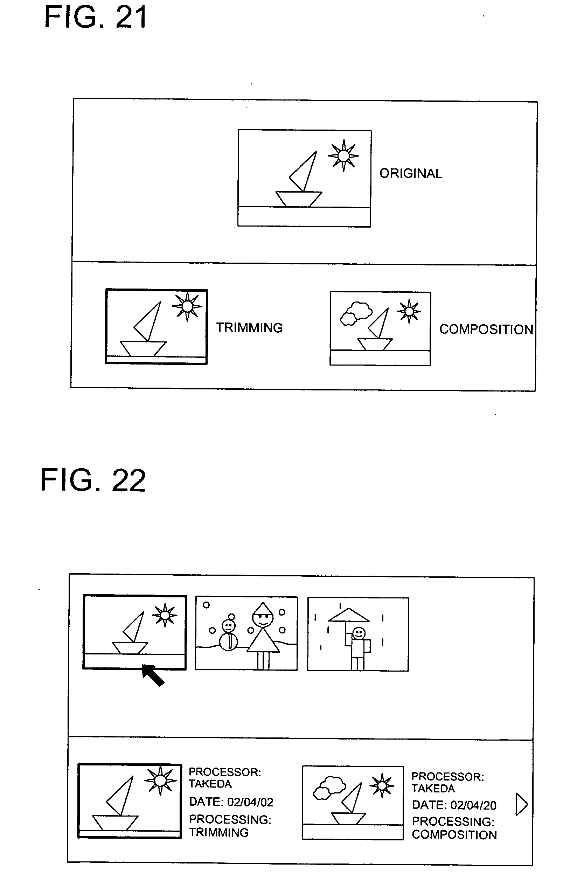

Fig. 21 is a diagram showing an example of data display wherein image data in one group and related information are displayed simultaneously. In the example of display in Fig. 21, CPU 2 displays image data of an original representing the typical image data to be large, and displays other image data in the group and the related information to be small. Fig. 22 is a diagram showing an example of data display wherein typical image data of plural groups, typical image data in process of being selected, other image data belonging to the same group stated above and related information are displayed. In the example of display in Fig. 22, CPU 2 displays typical image data where other image data which belong to the same group and related on a layering basis are present, by encircling them with a thick frame, and when this typical image data are selected, other image data belonging to the same group and its related information are displayed under the typical image data. Further, CPU 2 displays image data having related image data among other image data displayed under the typical image data, by encircling them with a thick frame.

In the examples of display in Fig. 21 and Fig. 22, it is possible to display image data efficiently even when a large amount of image data are present, because image data can be displayed on a layering basis. Incidentally, in the aforesaid example of display, the related information may either be displayed constantly together with image data or be displayed only when it is selected.

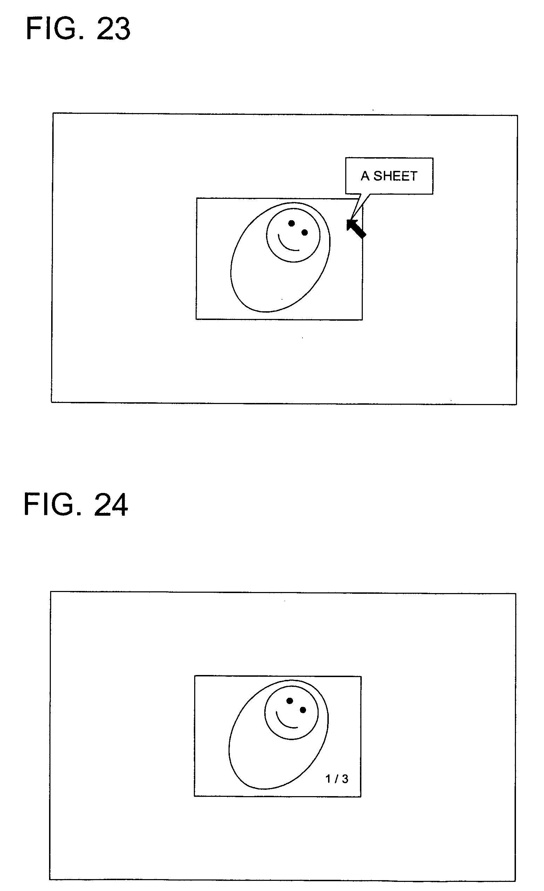

Fig. 23 is a diagram showing an example of data display wherein typical image data in one group and the number of the other image data are displayed. In the example of display in Fig. 23, CPU 2 displays the number "one sheet" of other image data belonging to the same group as that for the typical image data in display, when a cursor is moved on image data. Owing to this, a user can confirm whether image data other than the typical image data are present in the group or not, and can save useless retrieval processing.

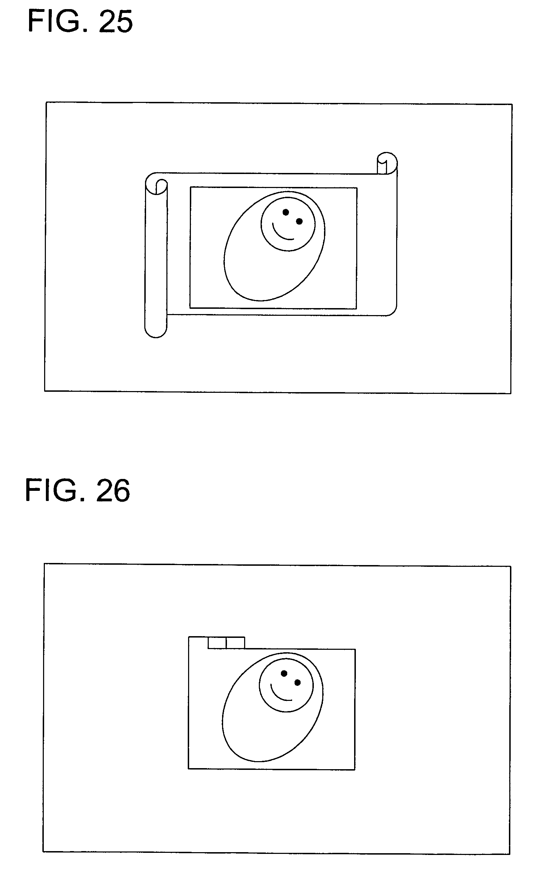

Incidentally, it is also possible to display so that an amount of other image data in the same group can be estimated by an amount of wound paper sheet, by showing (the number of image data in display) / (the number of all image data in the group) on a part of image data as shown in Fig. 24, or by drawing both ends of image data (either the right and left, or top and bottom) as if a sheet of paper is wound as shown in Fig. 25. It is further possible to show the number of image data in the group by the number of tabs by attaching a tab on a part of image data in display, as shown in Fig. 26.

Incidentally, in the examples of display in Fig. 23 - Fig. 26, it is also possible to display so that the number of image data can be confirmed if the image data are selected, even when the number of image data is displayed to be known constantly.

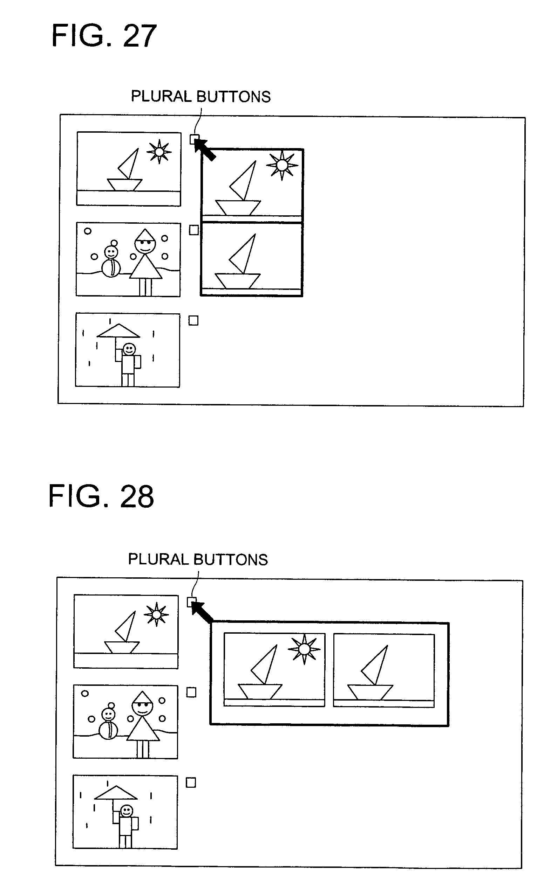

Each of Fig. 27 - Fig. 29 is a diagram showing an example of data display wherein typical image data are displayed one by one for plural groups, and typical image data of the group composed of plural image data is provided with plural buttons to be displayed. In the example in Fig. 27, CPU 2 displays typical image data for three groups and plural buttons, and when plural buttons of the typical image data displayed at the top on the left side are clicked to be selected, CPU 2 displays two of other image data belonging to the same group as that for the typical image data by arranging them up and down. Incidentally, other image data may also be arranged on right and left to be displayed as shown in Fig. 28.

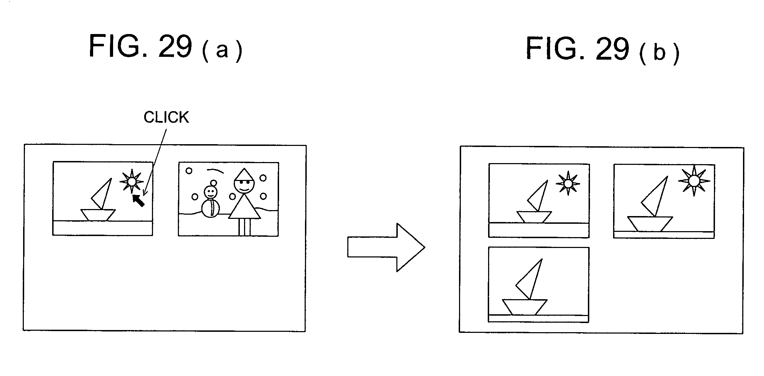

Fig. 29 is a diagram showing an example of image area transition wherein typical image data of plural groups are displayed one by one, and after the typical image data are selected, image data in the same group as that for the aforementioned typical image data are displayed for a glance. In the example of display in Fig. 29, CPU 2 displays typical image data for two groups in Fig. 29 (a), and when the typical image data on the left side are clicked to be selected in this case, an image area is transited to one shown in Fig. 29 (b), and CPU 2 displays other image data belonging to the same group as that of the selected typical image data.

In the examples of display shown in Fig. 27 - Fig. 29, a large amount of image data can be displayed efficiently.

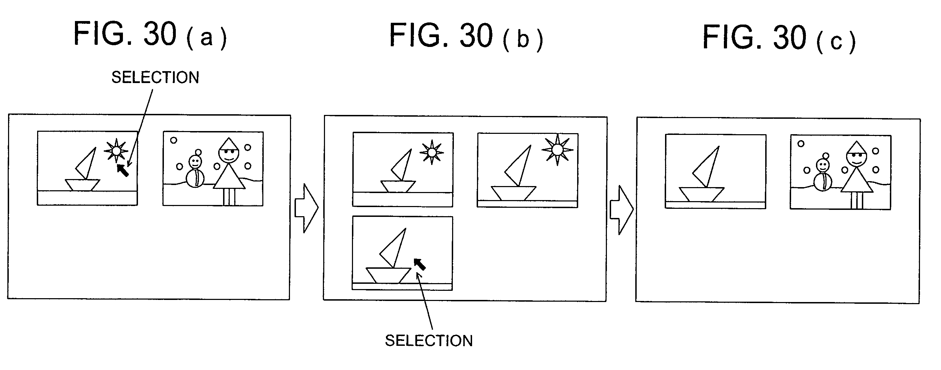

Fig. 30 is a diagram showing an example of image area transition wherein typical image data of plural groups are displayed one by one, and after the typical image data are selected, image data in the same group as that for the aforementioned typical image data are displayed for a glance, then, new typical image data are selected so that the typical image data are changed. In the example of display in Fig. 30, the typical image data can be changed by simple procedures, and a user can establish image data having strong impression or important image data to be the typical image data to make use of them for image retrieval.

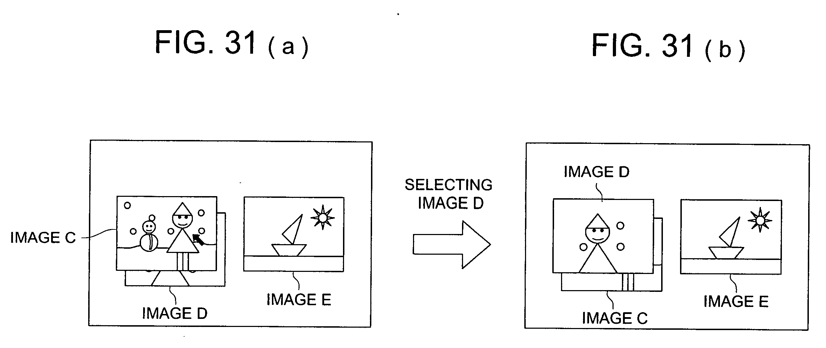

Fig. 31 is a diagram showing an example of image area transition wherein partial or all image data in plural groups are superposed to be displayed, and the selected image data are displayed ahead of the others. In the example of display in Fig. 31, when a part of data of image D displayed under data of image C displayed ahead as shown in Fig. 31 (a) is clicked to be selected, CPU 2 displays data of the selected image D ahead of data of image C as shown in Fig. 31 (b). Owing to this, a user can observe all image data selected.

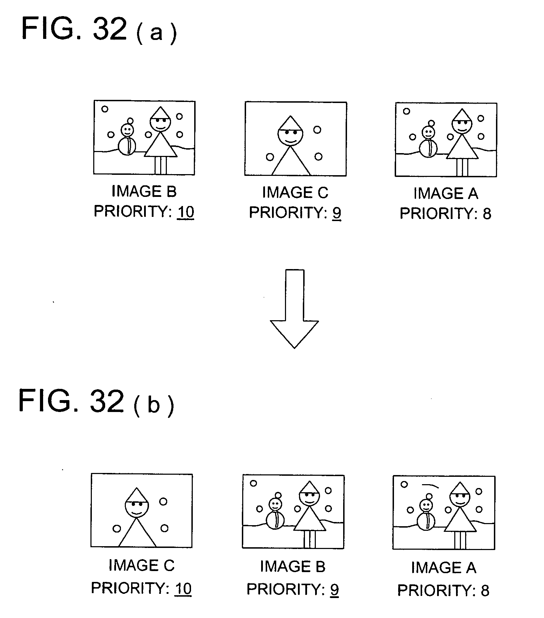

Fig. 32 (a) is a diagram showing plural image data in one group and related information, and Fig. 32 (b) is a diagram showing an example wherein related information is changed when a user rearrange the image data shown in Fig. 32 (a). CPU 2 arranges each data of image B having priority degree of 10, image C having priority degree of 2 and image A having priority degree of 8 from the left to right in succession to display them, as shown in Fig. 32 (a). When the instruction to change display positions for data of the image B and image C is inputted from the input section 3, CPU 2 updates the priority degree from 2 to 10 for data of the image C and from 10 to 2 for data of the image B, and rewrites the related information preserved in the classification file in Fig. 2. In this example of display, a user can change related information simply, only by changing a display position of image data, because CPU 2 controls related information established for each display position of image data and a display position of image data so that both of them may correspond to each other.

In the present embodiment, CPU 2 of computer 1 groups and sorts image data in image data base 7a based on related information between image data in image display processing, as stated above. Then, based on the results of grouping and sorting, CPU 2 displays typical image data of each group one by one on display section 6, or displays image data of all or a part of one group, and displays image data and its related information simultaneously or displays typical image data and the number of other image data in one group.

Accordingly, in the present embodiment, it is possible to retrieve and display desired image data quickly, because image data in data base 7a are grouped and sorted by related information in accordance with a use of a user and are displayed on display section 6. Further, by displaying image data quickly based on related information, images can be used efficiently. It is further possible to display desired image data only to be observed easily without displaying image data which are not desired.

Incidentally, though the related information was recorded in the header of image data, in the embodiment stated above, it is also possible to make the storage section 7 to store, for example, a table on which image data are corresponded to related information.

Further, with respect to detailed structure and detailed operations of computer 1, they may be modified freely within a range of the spirit and scope of the invention.
(1) Since the images are grouped by the use of related information showing relationship between images, desired images only can be retrieved promptly from an apparatus or from data base of images stored in the storage medium which can be mounted on or dismounted from the apparatus, to be displayed. In particular, when a vast amount of images are stored in a data base, it is highly convenient because the time required for retrieval of the desired images can be shortened. Further, images can be used efficiently, because images can be put in order by grouping of images so that contents of the total data base may be grasped easily.
(2) It is possible to display images efficiently and thereby to utilize the images by arranging images based on information of image discrimination, information about housing location, information showing a priority degree, information of processing and matters relevant thereto and information of time concerning images.
(3) It is possible to sort images for each group based on related information, and to arrange contents of the total data base so that they may be grasped easily, thus, images can be utilized efficiently.
(4) Since a user can arrange images in a desired grouping method and sorting method, by inputting grouping information and sorting information, the user can display images in the order wherein an image that is most important for the user comes first, for example, or the user can display important images only, thus, images can be displayed efficiently in accordance with a use of the user.
(5) Since the related information of images is also changed simultaneously when a user changes only the order of displaying images by inputting information of changing display order, control of images in the data base can be carried out easily.
(6) Since an image and its related information are displayed simultaneously, a user can observe the displayed image and can confirm information about that image and relationship with other images, thus, images can be utilized efficiently. By utilizing related information for the displayed image, other images related to this displayed image can be retrieved easily to be displayed.
(7) By displaying only a typical image, images can be displayed efficiently even when a large amount of images are present in the data base.
(8) Since there are displayed a typical image and the number of other images grouped in the same group as that for the typical image, in a single display, when perusing images successively to retrieve them, it is possible to grasp the number of images in each group without developing images grouped in the same group as that for the typical image.
(9) When retrieving the desired image, it is possible to retrieve the image quickly to display it, by selecting a typical image similar to the desired image and thereby, by displaying images grouped in the same group as that for the selected typical image.
(10) Images for all or a part of one group having common information can be displayed at the same time in accordance with a use. For example, when retrieving an image in the group, all images are displayed for a glance, and when a specific image only is required to be displayed to be large for easy observation, a partial image can be displayed.
(11) Images can be displayed in a method suitable for the number of the images and for application. For example, when the number of images grouped in the same group is large, and when images are hard to be observed if all images are displayed at the same time, the images can be superposed to be displayed so that they may be easily observed.
(12) Under the condition that images having common information are superposed to be displayed, if the desired image is selected, it can be displayed preferentially.

Disclosed embodiment can be varied by a skilled person without departing from the spirit and scope of the invention.

## Claims

1. An apparatus for processing a plurality of images to be displayed on a display screen of a display device, comprising:
an extracting section to extract related information, being common among said plurality of images, based on incidental information included in said plurality of images;
a grouping section to group said plurality of images into a plurality of image groups, based on said related information extracted by said extracting section; and
a display controlling section to control said display device so as to display said plurality of images for every image group grouped by said grouping section.

2. The apparatus of claim 1,
wherein said related information includes at least one of a first information set for identifying each of said images, a second information set for indicating a storage area of image data, a third information set for indicating a priority of each of said images, a fourth information set for indicating a modification processing for each of said images and a fifth information set for indicating a time and date in respect to each of said images.

3. The apparatus of claim 1, further comprising:
a sorting section to sort images included in each of said plurality of image groups, based on said related information;
wherein said display controlling section controls said display device so as to display said images, sorted by said sorting section, for every image group grouped by said grouping section.

4. The apparatus of claim 3, further comprising:
an inputting section to input grouping information and/or sorting information;
wherein, when said inputting section inputs said grouping information, said grouping section groups said plurality of images into said plurality of image groups, based on said grouping information inputted by said inputting section, while, when said inputting section inputs said sorting information, said sorting section sorts said images included in each of said plurality of image groups, based on said sorting information inputted by said inputting section.

5. The apparatus of claim 4,
wherein said inputting section inputs display-order changing information for changing a display-order of said images for every image group, and then, said display controlling section changes said display-order of said images for every image group, displayed on said display screen of said display device, to a new display-order based on said display-order changing information; and said apparatus further comprising:
a related information revising section to revise said related information, based on said display-order changing information.

6. The apparatus of claim 1,
wherein said display controlling section controls said display device so as to display both said images and said related information on said display screen of said display device.

7. The apparatus of claim 1,
wherein said display controlling section controls said display device so as to display anyone of said images as a representative image of said image group on said display screen of said display device.

8. The apparatus of claim 7,
wherein said display controlling section controls said display device so as to display both said representative image and a number of other images included in said image group represented by said representative image on said display screen of said display device.

9. The apparatus of claim 7, further comprising:
a selecting section to select said representative image out of said images;
wherein, when said selecting section selects said representative image out of said images, said display controlling section controls said display device so as to display both said representative image and other images included in said image group represented by said representative image on said display screen of said display device.

10. The apparatus of claim 1,
wherein said display controlling section controls said display device so as to display a listing table of either all images or several images, included in said image group grouped by said grouping section on said display screen of said display device.

11. The apparatus of claim 1,
wherein said display controlling section controls said display device so as to display either all images or several images, included in said image group grouped by said grouping section, in a mode of duplicating them with each other on said display screen of said display device.

12. The apparatus of claim 11, further comprising:
a selecting section to select a specific image out of said images displayed in said mode of duplicating them with each other;
wherein, when said selecting section selects said specific image, said display controlling section controls said display device so as to display said specific image selected by said selecting section at an uppermost position on said display screen of said display device.

13. A method for processing a plurality of images, comprising the steps of:
extracting related information, being common among said plurality of images, based on incidental information included in said plurality of images;
grouping said plurality of images into a plurality of image groups, based on said related information extracted in said extracting step; and
controlling a display device so as to display said plurality of images for every image group, grouped in said grouping step, on a display screen of said display device.

14. The method of claim 13,
wherein said related information includes at least one of a first information set for identifying each of said images, a second information set for indicating a storage area of image data, a third information set for indicating a priority of each of said images, a fourth information set for indicating a modification processing for each of said images and a fifth information set for indicating a time and date in respect to each of said images.

15. The method of claim 13, further comprising the step of:
sorting images included in each of said plurality of image groups, based on said related information;
wherein said display device is controlled in said controlling step so as to display said images, sorted in said sorting step, for every image group grouped in said grouping step.

16. The method of claim 15, further comprising the step of:
inputting grouping information and/or sorting information;
wherein, when said grouping information are inputted in said inputting step, said plurality of images are grouped into said plurality of image groups, based on said grouping information, in said grouping step, while, when said sorting information are inputted in said inputting step, said images included in each of said plurality of image groups are sorted, based on said sorting information, in said sorting step.

17. The method of claim 16,
wherein display-order changing information, for changing a display-order of said images for every image group, are inputted in said inputting step; and said method further comprising the steps of:
changing said display-order of said images for every image group, displayed on said display screen of said display device, to a new display-order, based on said display-order changing information; and
revising said related information, based on said display-order changing information.

18. The method of claim 13,
wherein said display device is controlled in said controlling step so as to display both said images and said related information on said display screen of said display device.

19. The method of claim 1,
wherein said display device is controlled in said controlling step so as to display anyone of said images as a representative image of said image group on said display screen of said display device.

20. The method of claim 19,
wherein said display device is controlled in said controlling step so as to display both said representative image and a number of other images included in said image group represented by said representative image on said display screen of said display device.

21. The method of claim 19, further comprising the step of:
selecting said representative image out of said images;
wherein, when said representative image is selected out of said images in said selecting step, said display device is controlled in said controlling step so as to display both said representative image and other images included in said image group represented by said representative image on said display screen of said display device.

22. The method of claim 13,
wherein said display device is controlled in said controlling step so as to display a listing table of either all images or several images, included in said image group grouped in said grouping step on said display screen of said display device.

23. The method of claim 13,
wherein said display device is controlled in said controlling step so as to display either all images or several images, included in said image group grouped in said grouping step, in a mode of duplicating them with each other on said display screen of said display device.

24. The method of claim 23, further comprising the step of:
selecting a specific image out of said images displayed in said mode of duplicating them with each other;
wherein, when said specific image is selected in said selecting step, said display device is controlled in said controlling step so as to display said specific image selected in said selecting step at an uppermost position on said display screen of said display device.

25. A computer program for processing a plurality of images, comprising the functional steps of:
extracting related information, being common among said plurality of images, based on incidental information included in said plurality of images;
grouping said plurality of images into a plurality of image groups, based on said related information extracted in said extracting step; and
controlling a display device so as to display said plurality of images for every image group, grouped in said grouping step, on a display screen of said display device.

26. The computer program of claim 25,
wherein said related information includes at least one of a first information set for identifying each of said images, a second information set for indicating a storage area of image data, a third information set for indicating a priority of each of said images, a fourth information set for indicating a modification processing for each of said images and a fifth information set for indicating a time and date in respect to each of said images.

27. The computer program of claim 25, further comprising the functional step of:
sorting images included in each of said plurality of image groups, based on said related information;
wherein said display device is controlled in said controlling step so as to display said images, sorted in said sorting step, for every image group grouped in said grouping step.

28. The computer program of claim 27, further comprising the functional step of:
inputting grouping information and/or sorting information;
wherein, when said grouping information are inputted in said inputting step, said plurality of images are grouped into said plurality of image groups, based on said grouping information, in said grouping step, while, when said sorting information are inputted in said inputting step, said images included in each of said plurality of image groups are sorted, based on said sorting information, in said sorting step.

29. The computer program of claim 28,
wherein a display-order changing information, for changing a display-order of said images for every image group, are inputted in said inputting step; and said computer program further comprising the functional steps of:
changing said display-order of said images for every image group, displayed on said display screen of said display device, to a new display-order, based on said display-order changing information; and
revising said related information, based on said display-order changing information.

30. The computer program of claim 25,
wherein said display device is controlled in said controlling step so as to display both said images and said related information on said display screen of said display device.

31. The computer program of claim 25,
wherein said display device is controlled in said controlling step so as to display anyone of said images as a representative image of said image group on said display screen of said display device.

32. The computer program of claim 31,
wherein said display device is controlled in said controlling step so as to display both said representative image and a number of other images included in said image group represented by said representative image on said display screen of said display device.

33. The computer program of claim 31, further comprising the functional step of:
selecting said representative image out of said images;
wherein, when said representative image is selected out of said images in said selecting step, said display device is controlled in said controlling step so as to display both said representative image and other images included in said image group represented by said representative image on said display screen of said display device.

34. The computer program of claim 25,
wherein said display device is controlled in said controlling step so as to display a listing table of either all images or several images, included in said image group grouped in said grouping step on said display screen of said display device.

35. The computer program of claim 25,
wherein said display device is controlled in said controlling step so as to display either all images or several images, included in said image group grouped in said grouping step, in a mode of duplicating them with each other on said display screen of said display device.

36. The computer program of claim 35, further comprising the functional step of:
selecting a specific image out of said images displayed in said mode of duplicating them with each other;
wherein, when said specific image is selected in said selecting step, said display device is controlled in said controlling step so as to display said specific image selected in said selecting step at an uppermost position on said display screen of said display device.
